# EUROPÄISCHE PATENTANMELDUNG

(11) **EP 1 318 159 A2**
(43) Veröffentlichungstag der Anmeldung: **11.06.2003**
(21) Anmeldenummer: 02027072.4
(22) Anmeldetag: 03.12.2002
(51) Int. Cl.: C08F 226/02, C08F 226/06, B01D 39/04

(54) **Verwendung unlöslicher hochvernetzter Popcorn-Polymerisate als Filterhilfs-und/oder Stabilisierungsmittel**

(30) Priorität: 07.12.2001 DE 10160140
(71) Anmelder: BASF AKTIENGESELLSCHAFT, 67056 Ludwigshafen (DE)
(72) Erfinder: Gomez, Marcos, Dr., 69117 Heidelberg (DE); Meffert, Helmut, Dr., 68167 Mannheim (DE); Hamm de Bantleon, Elisa, 80634 München (DE); Ziehl, Jürgen, 67112 Mutterstadt (DE); Lebtig, Barbara, 74360 Ilsfeld (DE); Mathauer, Klemens, Dr., 69115 Heidelberg (DE); Manteca Zuazo, Izaskun, Dr., 67063 Ludwigshafen (DE)

(57) **Zusammenfassung**

Die vorliegende Erfindung betrifft die Verwendung von Polystyrolenthaltenden Popcorn-Polymerisaten als Filterhilfs- und/oder Stabilisierungsmittel für die Filtration bzw. Stabilisierung von wässrigen Flüssigkeiten, ein Verfahren zur Filtration bzw. die Stabilisierung, sowie neue, nur wenig quellbare Popcorn-Polymerisate.

## Beschreibung

Die vorliegende Erfindung betrifft die Verwendung von Polystyrolenthaltenden Popcorn-Polymerisaten als Filterhilfs- und/oder Stabilisierungsmittel für die Filtration bzw. Stabilisierung von wässrigen Flüssigkeiten, ein Verfahren zur Filtration bzw. die Stabilisierung, sowie neue, nur wenig quellbare Popcorn-Polymerisate.

Die Trennung von Polyphenolen oder Proteinen, die Komplexe binden können über Ausfällung oder Filtration, ist in vielen Getränkeproduktionsprozessen ein wichtiger Verfahrensschritt, weil die Entfernung dieser Stoffe zu einer längeren Haltbarkeit führt.

Oftmals erfolgt eine Stabilisierung erst mit der Abtrennung von Trübung verursachenden Substanzen, wie Polyphenolen oder Proteinen durch Filtration. Die Stabilisierung kann durch Bindung oder Ausfällung der die Haltbarkeit verkürzenden Stoffe erfolgen. Beispielsweise bindet bzw. fällt Kieselgel Proteine und Polyvinylpyrrolidon bindet Phenole.

Filterhilfsmittel und Stabilisierungsmittel werden bislang getrennt oder zusammen eingesetzt. Beim Einsatz des jeweiligen Stoffes allein bedeutet dies apparativen Aufwand und beim gemeinsamen Einsatz ist die Entsorgung oft ein Problem.

Unter dem Begriff Filterhilfsmittel versteht man eine Reihe von Produkten, die in loser, pulvriger, granulierter oder fasriger Form als Anschwemmmaterial in der Filtration eingesetzt werden.

Filterhilfsmittel kann man vor Beginn der Filtration als Filterhilfsschicht (Anschwemmfilter) auf das Filterhilfsmittel aufbringen, um einen lockeren Kuchenaufbau zu erzielen, oder kontinuierlich der zu filternden Trübe zusetzen.

Bekannte Filtrierzusatzstoffe sind beispielsweise Diatomeen, Naturalprodukte, die aus der Kalzinierung von Diatomit hervorgehen. Die Hauptbestandteile sind amorphe SiO₂-Modifikationen, begleitet von Oxiden des Aluminiums, Eisens und anderer Elemente sowie deren silikatische Verbindungen. Perlitte sind geglühte, gemahlene selektierte Blähtone vulkanischen Ursprungs (Rhyolite). Die Struktur ist blättchenförmig und chemisch als ein Natrium-, Kalium-, Aluminium-Silikat zu beschreiben. Bentonite sind Tonmineralien mit einer hohen Quell- und Absorptionsfähigkeit.

Filterhilfsstoffe sollten während der Filtration ein poröses Milieu bilden, dass die zu beseitigenden Unreinheiten aufnimmt und den Abfluss der flüssigen Phase erleichtert.

Die Zusatzstoffe sollten eine erhöhte Porosität haben und sollten sich auch unter Druckeinfluss nicht verformen. Außerdem sollten die Stoffe chemisch inert und leicht zurückgewinnbar sein.

Für das Filtrieren von Bier werden gegenwärtig überwiegend Kieselgur-Anschwemm- sowie Schichtenfilter benutzt. Bei der Anschwemmfiltration wird vor Filtrationsbeginn auf einer Stützfläche (Filtergebe) eine Kieselgur-Vorschicht angeschwemmt. Nach Anschwemmen dieser Vorschicht wird dem zu filtrierenden Bier (Unfiltrat) ein Gemisch aus feiner und grober Kieselgur zudosiert. Bei der Bierproduktion muss mit einem Kieselgurverbrauch von 150 bis 200 g/hl Bier gerechnet werden. Für die Anschwemmfiltration hat sich Kieselgur besonders wegen seines großen Porenvolumens, seines niedrigen Schüttgewichtes, seiner höheren Saugfähigkeit und seiner großen spezifischen Oberfläche bewährt.

Ein Nachteil bei der Verwendung von Kieselgur ist, dass es nach einer Anzahl von Filterbetriebsstunden durch zurückgehaltenes Feststoffmaterial in seiner Wirksamkeit verbraucht ist und von den Stützflächen der Filter entfernt und ausgetauscht werden muss.

Das Deponieren des verbrauchten Kieselgurs ist aufgrund gesetzlicher Vorschriften nur mit großen Schwierigkeiten und Kostenaufwand möglich. Versuche, das als Filtermaterial unbrauchbare Kieselgur zu regenerieren, erwiesen sich als in der Praxis nicht durchführbar. Zusätzlich ist Kieselgur seit einiger Zeit wegen seiner eventuell krebserzeugenden Wirkung in Diskussion.

WO 98/40149 beschreibt die Verwendung von kleinteiligen Partikeln aus Pflanzenfasern als Filterhilfsmittel. Diese Filterhilfsmittel umfassen Holzpartikel, Holzfasern und Holzzerkleinerungsreste. Vor Gebrauch müssen die Partikel einer Behandlung mit einer verdünnten Säure und/oder Lauge unterzogen werden.

WO 96/35497 offenbart regenerierbare Filterhilfsmittel für die Filtration von wässrigen Medien, insbesondere von Bier, bestehend aus Polyamiden, Polyvinylchlorid, Polypropylen, Polystyren oder Polycaprolactam.

EP 483 099 beschreibt ein Verfahren zur Bierfiltration unter Verwendung von Filterhilfsmitteln, die aus sphäroiden Teilchen einer Partikelgröße zwischen 5 und 50 µm bestehen.

EP 351 361 beschreibt hochvernetzte Polyvinylpyrrolidone (PVPP) als Stabilisierungs- und Filterhilfsmittel.

WO 00/68286 offenbart Styrol-haltige Popcorn-Polymerisate mit einem Styrol-Gehalt größer 50 Gew.-%.

Die Entfernung von Inhaltsstoffen aus Getränken, die eine Trübung verursachen bzw. die Stabilität beeinflussen, beispielsweise die Entfernung von Polyphenolen aus Bier, steht in engem Zusammenhang mit der Geschmacksqualität. Eine gezielte Einstellung der Absorption der Polyphenole ist mit den im Stand der Technik beschriebenen Filterhilfs- bzw. Stabilisierungsmitteln aber nur schwer möglich.

Aufgabe der Erfindung war es daher, ein Filterhilfsmittel und/oder Stabilisierungsmittel für die Getränkeherstellung bereitzustellen, das zum einen einfach zu regenerieren ist und das es ermöglicht, die Absorption von Trübung verursachenden Substanzen bzw. von den die Stabilität beeinträchtigenden Substanzen gezielt zu beeinflussen.

Überraschenderweise wurde die Aufgabe gelöst durch die erfindungsgemäßen Popcornpolymerisate.

Gegenstand der Erfindung sind unlösliche, nur wenig quellbare Popcorn-Polymerisate, enthaltend
a) 0,1 bis 99 Gew.-% eines N-Vinyllactams oder N-Vinylamins
b) 0 bis 10 Gew.-% einer difunktionellen Vernetzerkomponente
c) 0,1 bis 50 Gew.-% mindestens eines weiteren radikalisch polymerisierbaren Monomers
wobei sich die Gew.-%-Angaben der Einzelkomponenten auf die Gesamtmenge des Popcorn-Polymerisates beziehen und sich zu 100 % addieren.

Der Name Popcorn-Polymerisate steht für schaumige, krustige Polymerisat-Körner mit Blumenkohl-artiger Struktur. Aufgrund ihrer meist starken Vernetzung sind Popcorn-Polymerisate in der Regel unlöslich und kaum quellbar.

Popcorn-Polymerisate werden beispielsweise zur Absorption von Gerbstoffen aus Getränken und als Ionentauscher verwendet. Carboxylgruppen-haltige Popcorn-Polymerisate können auch durch Verseifung von Acrylester- und Acrylamideinheiten enthaltenden Polymerisaten erhalten werden.

Aus Ullmanns Encyklopädia der Tech. Chemie, 4. Aufl. Band 19, Seite 385 (1980) ist bekannt, dass beim Erhitzen von N-Vinylpyrrolidon mit Hydroxiden und Alkoholaten der Alkali- und Erdalkali-Metalle in spontaner Reaktion ein unlösliches, in Wasser schwach quellbares Polymerisat gebildet wird. Solche als Popcorn-Polymerisate bezeichneten Stoffe entstehen auch beim Erhitzen von N-Vinylpyrrolidon mit Divinyl-Verbindungen unter Ausschluss von Sauerstoff.

Als hydrophile Komponenten a) sind allgemein N-Vinyllactame oder N-Vinylamine gemeint. Bevorzugt seien dabei folgende polymerisierbare Comonomere genannt: N-Vinyllactame und N-Vinylamine, insbesonders N-Vinylpyrrolidon, N-Vinylpiperidon, N-Vinylcaprolactam, N-Vinylimidazol, N-Vinyl-2-Methylimidazol, N-Vinyl-4-Methylimidazol sowie N-Vinylformamid.

Bevorzugte hydrophile Komponenten sind N-Vinylpyrrolidon, N-Vinylimidazol und N-Vinylcaprolactam, besonders bevorzugt N-Vinylpyrrolidon.

Die Monomere a) werden in Rahmen der Erfindung in Mengen von 0,1 bis 99 Gew.-%, bevorzugt größer als 50 Gew.-% bezogen, auf die Gesamtmenge des Polymerisates, eingesetzt.

Als Monomere b) sind generell Verbindungen gemeint, die mindestens 2 ethylenisch ungesättigte nichtkonjugierte Doppelbindungen im Molekül enthalten und somit als difunktionelle Vernetzer bei der Polymerisation wirken. Bevorzugte Vertreter der Monomere c) sind beispielsweise Alkylenbisacrylamide wie Methylenbisacrylamid und N,N'-Acryloylethylendiamin, N,N'-Divinylethylenharnstoff, N,N'-Divinylpropylenharnstoff, Ethyliden-bis-3-(N-vinylpyrrolidon), N,N'-Divinyldiimidazolyl-(2,2')butan und 1,1'-bis-(3,3'-vinylbenzimidazolith-2-on)-1,4-butan. Weitere geeignete Vernetzer sind beispielsweise Alkylenglykoldi(meth)-acrylate wie Ethylenglykoldiacrylat, Ethylenglykoldimethacrylat, Tetraethylenglykolacrylat, Tetraethylenglykoldimethacrylat, Diethylenglykolacrylat, Diethylenglykolmethacrylat, aromatische Divinylverbindungen wie Divinylbenzol und Divinyltoluol sowie Vinylacrylat, Allylacrylat, Allylmethacrylat, Divinyldioxan, Pentaerythrittriallylether sowie Gemische der Vernetzer.

Besonders bevorzugte Vernetzer sind N,N'-Divinylethylenharnstoff und Divinylbenzol.

Die Vernetzer werden gegebenenfalls in Mengen von 0 bis 10 Gew.-%, bevorzugt 0,1 bis 8 Gew.-%, besonders bevorzugt in Mengen von 0,2 bis 5 Gew.-% bezogen, auf die Gesamtmenge des Polymerisates, eingesetzt.

Als Monomere c) sind generell Verbindungen gemeint, die radikalische Polymerisation zu unterziehen fähig sind. Vertreter der Monomere c) sind beispielsweise Mono- oder Bi-Olefine wie Propylen, Ethylen, iso-Butylen, Methylbuten-1, Methylpenten-1, Isopren, Butadien, Hexadien, Dicyclopentadien, Ethyliden Norbornen, Styrol oder ungesättigten Styrolderivate wie beispielsweise Sulfongruppen-haltige Styrole, z.B. Styrol-3-sulfonsäure oder Natrium-styrol-3-sulfonat, Styrol-4-sulfonsäure oder Natrium-styrol-4-sulfonat sowie Aminogruppen-haltige Styrole. Als Aminogruppen-haltige Styrole sind beispielsweise Styrole zu verstehen, die in der 3-Position folgende Substituenten tragen: -CH₂N⁺(CH₃)₃Cl⁻, -CH₂N⁺(CH₃)₂CH₂CH₂OHCl⁻, -CH₂N(CH₃)₂, CH₂NHCH₃, CH₂NH₂. Weitere Monomere sind halogenhaltige Vinylmonomere, wie beispielsweise Vinylchlorid, Vinylfluorid, Chloropren oder Vinylidenchlorid. Monomerderivate von α,β-ungesättigten Säuren wie Acrylatester, Methacrylatester, wie Acrylamide und Acrylnitril sind auch gemeint. Beispiele von diesen Estern sind im einzelnen Acrylsäuremethylester, Methacrylsäuremethylester, Acrylsäureethylester, Methacrylsäureethylester, Acrylsäure-n-propylester, Methacrylsäure-n-propylester, Acrylsäureisopropylester, Methacrylsäureisopropylester, Acrylsäurelaurylester, Methacrylsäurelaurylester, Acrylsäurestearylester, Methacrylsäurestearylester und die Ester der Acrylsäure und Methacrylsäure, die sich von den isomeren Butanolen ableiten, sowie Hydroxyethylacrylat, Hydroxyethylmethacrylat, Hydroxymethylmethacrylat, Hydroxypropylacrylat, Hydroxypropylmethacrylat, Hydroxybutylacrylat, Hydroxybutylmethacrylat. Weitere geeignete Monomere sind z.B. ungesättigten Alkohole und Amine und deren Derivate, wie beispielsweise Vinylalkohol, Vinylacetat, Vinylpropionat, Vinylsterat, Vinylbenzoat, Vinylmaleat, Vinylbutyral, Allylphthalat, Allylmelamin; α,β-ungesättigte Säuren wie Acrylsäure und Methacrylsäure können sowohl neutralisiert oder auch nicht neutralisiert sein. Monomerderivate von α,β-ungesättigten Säuren wie Acrylatester, Methacrylatester, Acrylamide und Acrylnitril sind auch gemeint. Beispiele von diesen Estern sind im einzelnen Acrylsäuremethylester, Methacrylsäuremethylester, Acrylsäureethylester, Methacrylsäureethylester, Acrylsäure-n-propylester, Methacrylsäure-n-propylester, Acrylsäureisopropylester, Methacrylsäureisopropylester, Acrylsäurelaurylester, Methacrylsäurelaurylester, Acrylsäurestearylester, Methacrylsäurestearylester und die Ester der Acrylsäure und Methacrylsäure, die sich von den isomeren Butanolen ableiten, sowie Hydroxyethylacrylat, Hydroxyethylmethacrylat, Hydroxymethylmethacrylat, Hydroxypropylacrylat, Hydroxypropylmethacrylat, Hydroxybutylacrylat, Hydroxybutylmethacrylat. Weitere Monomere sind Acrylsäureamide und Methacrylsäureamide. Bevorzugt werden Styrole, Acrylsäure und Methacrylsäure eingesetzt, insbesonders bevorzugt werden Styrole eingesetzt.

Die Monomeren c) werden in Rahmen der Erfindung in Mengen von 0,1 bis 50 Gew. -%, bevorzugt von 20 bis 50 Gew.-%, bezogen auf die Gesamtmenge des Polymerisates, eingesetzt.

Die Popcorn-Polymerisation wird nach bekannten Verfahren durchgeführt, z.B. als Fällungspolymerisation oder durch Polymerisieren in Substanz. Bevorzugt ist eine Arbeitsweise, bei der man, wie in der EP-A-0 177 812 beschrieben, die Popcorn-Polymerisation dadurch startet, dass man eine Mischung aus 99,6 bis 98,8 Gew.-% N-Vinylpyrrolidon und 0,4 bis 1,2 Gew.-% einer mindestens zwei ethylenisch ungesättigte Doppelbindungen aufweisenden Verbindung als Vernetzer auf eine Temperatur von 60 bis 150°C in Abwesenheit von Sauerstoff und Polymerisationsinitiatoren erhitzt. Diese Polymerisation wird insbesondere durch Anwesenheit geringer Mengen an Natronlauge oder Kalilauge initiiert. Innerhalb einer kurzen Zeit bildet sich ein polymerisationsfähiges Popcorn-Polymerisat, das bei Zugabe der restlichen Monomermischung, d.h. im besonderen des Monomeren Styrol und der restlichen Menge der Monomeren c), die Popcorn-Polymerisation dieser Monomeren ohne Induktionsperiode startet. Zudem ist es möglich, das polymerisationsfähige Popcorn-Polymerisat in eine Vorlage zu überführen, die Monomer und Vernetzer enthält, bzw. in die dann Monomer und Vernetzer zudosiert werden.

Die Popcorn-Polymerisation kann auch ohne Lösungsmittel durchgeführt werden. Dabei wird das Monomergemisch aus a), b) und c) durch Einleiten von Stickstoff inertisiert und anschließend auf eine Temperatur im Bereich von 20 bis 200°C, bevorzugt 100 bis 200°C, besonders bevorzugt 150 bis 180°C, erhitzt. Es ist vorteilhaft, auch während der Polymerisation weiter einen schwachen Stickstoffstrom durch die Monomeren zu leiten.

Der Ausschluss von Sauerstoff wird auch dadurch erreicht, dass man den Ansatz bei einem Druck polymerisiert, der unter dem Atmosphärendruck liegt und bei dem die Monomeren sieden. Je nach Art der eingesetzten Monomeren und der gewählten Temperatur polymerisiert die Mischung innerhalb von 1 bis 20 Stunden. Beispielsweise bilden sich bei der Polymerisation von N-Vinylamiden mit 2 % N,N'-Divinylethylenharnstoff bei 150°C unter Rühren mit einem kräftigen Rührwerk und einem Druck von 310 mbar nach 2,5 Stunden die ersten Polymerisatteilchen, deren Menge langsam zunimmt, bis nach ca. 10 Stunden Polymerisationszeit das Reaktionsgemisch aus einem Pulver besteht. Das Popcorn-Polymerisat wird daraus in Ausbeuten von über 90 % in Form eines Pulvers mit einer durchschnittlichen Teilchengröße von etwa 10 µm bis 5 mm, vorzugsweise 10 µm bis 500 µm, erhalten.

Zur Herstellung der Popcorn-Polymerisate wird die Fällungspolymerisation in Wasser bevorzugt. Die Konzentration der Monomeren wird dabei zweckmäßigerweise so gewählt, dass das Reaktionsgemisch über die gesamte Reaktionsdauer hinweg gut gerührt werden kann. Bei einer zu hohen Konzentration der Monomeren in Wasser, z.B. bei 95 %, werden die Polymerisatkörner oft klebrig, so dass ein Rühren schwieriger wird als in Abwesenheit von Wasser. Um die Reaktion in den üblichen Rührkesseln durchzuführen, wählt man Monomerkonzentrationen, bezogen auf die wässrige Mischung, von etwa 5 bis 30, vorzugsweise 10 bis 20 Gew.-%. Falls kräftigere Rührwerke zur Verfügung stehen, kann die Monomerkonzentration der wässrigen Lösung auch bis auf 50 Gew.-%, gegebenenfalls auch darüber, erhöht werden.

Der Ausschluss von Sauerstoff lässt sich am besten dadurch erreichen, dass man das zu polymerisierende Gemisch zum Sieden erhitzt und gegebenenfalls zusätzlich in einer Inertgasatmosphäre arbeitet, indem beispielsweise Stickstoff durch die Reaktionsmischung geleitet wird. Die Polymerisationstemperaturen kann in einem weiten Bereich variiert werden, z.B. von etwa 20 bis 200, vorzugsweise 50 bis 150°C.

In einigen Fällen kann es auch vorteilhaft sein, zur völligen Entfernung von gelöstem Sauerstoff geringe Menge - 0,1 bis 1 Gew.-%, bezogen auf Monomer - eines Reduktionsmittels wie Natriumsulfit, Natriumpyrosulfit, Natriumdithionit, Ascorbinsäure oder Mischungen der Reduktionsmittel zuzusetzen.

Bei einer besonders bevorzugten Ausführungsform der Polymerisation wird das Comonomer c), ein Teil des Vernetzers, Wasser und gegebenenfalls ein Puffer sowie ein Reduktionsmittel in einem schwachen Stickstoffstrom erhitzt, bis sich die ersten Polymerisatteilchen zeigen. Dann wird eine vorher durch Einblasen von Stickstoff inertisierte Mischung aus im besonderen Styrol oder Acrylsäure, gegebenenfalls Vernetzer und gegebenenfalls Wasser als Verdünnungsmittel innerhalb von 0,2 bis 10 Stunden zugegeben. Das Styrol oder die Acrylsäure und der Vernetzer können auch in einem mit Wasser mischbaren Lösungsmittel gelöst sein. Dies können z.B. niedere Alkohole wie Methanol, Ethanol, Isopropanol, n-Propanol oder t-Butanol sein. Diese Arbeitsweise hat den Vorteil, dass die Popcorn-Polymerisation eine nur verhältnismäßig kurze Zeit in Anspruch nimmt. Die Popcorn-Polymerisate können aus der wässrigen Lösung isoliert und gereinigt werden.

Die Popcorn-Polymerisate fallen üblicherweise mit einer Ausbeute von etwa 70 bis > 99 % der theoretischen Ausbeute an. Sie können aus der wässrigen Suspension durch Filtrieren oder Zentrifugieren mit anschließendem Auswaschen mit Wasser und Trocknen in üblichen Trocknern wie Umluft- oder Vakuumtrockenschrank, Schaufeltrockner oder Stromtrockner isoliert werden. Die Popcorn-Polymerisate sind in Wasser und allen Lösemitteln praktisch nicht löslich und quellen darin auch nur geringfügig.

Ein weiterer Gegenstand der Erfindung ist ein Verfahren zur Filtration und/oder Stabilisierung einer wässrigen Flüssigkeit, wobei man ein Polymerisat als Filterhilfs- bzw. Stabilisierungsmittel enthaltend
a) 0,1 bis 99 Gew.-% eines N-Vinyllactams oder N-Vinylamins
b) 0 bis 10 Gew.-% einer difunktionellen Vernetzerkomponente
c) 0,1 bis 50 Gew.-% mindestens eines weiteren radikalisch polymerisierbaren Monomers
einsetzt, wobei sich die Gew.-%-Angaben der Einzelkomponenten auf die Gesamtmenge des Popcorn-Polymerisates beziehen und sich zu 100 % addieren.

Das Verfahren kann dabei so ausgeführt werden, dass nur jeweils eine Filtration oder eine Stabilisierung des wässrigen Mediums stattfindet, oder aber, dass neben der Filtration auch eine gleichzeitige Stabilisierung erfolgt.

Bei der Filtration wird bevorzugt die Technik der Anschwemmfiltration verwendet.

Ebenfalls Gegenstand der Erfindung ist die Verwendung der erfindungsgemäßen Polymerisate als Filterhilfs- und/oder Stabilisierungsmittel.

Unter dem Begriff der Filtration versteht man das Durchströmen eines porösen Filtermittels durch eine Suspension (Trübe), bestehend aus einer diskontinuierlichen Phase (dispergierte Stoffe) und einer kontinuierlichen Phase (Dispersionsmittel). Dabei werden Feststoffteilchen auf dem Filtermittel abgelagert und die filtrierte Flüssigkeit (Filtrat) verlässt das Filtermittel klar. Als äußere Kraft zur Überwindung des Strömungswiderstandes wirkt hierbei eine angelegte Druckdifferenz.

Man kann beim Filtrationsvorgang grundsätzlich verschiedene Mechanismen der Feststoffabscheidung beobachten. Hauptsächlich handelt es sich hierbei um eine Oberflächen- oder Kuchenfiltration, Schichtenfiltration sowie Siebfiltration. Häufig hat man es mit einer Kombination aus wenigstens zwei Vorgängen zu tun.

Im Falle der Oberflächen- oder Kuchenfiltration kommen sogenannte Anschwemmfilter in verschiedenen Ausführungen für die Getränkefiltration zur Anwendung (Kunze, Wolfgang, Technologie Brauer und Mälzer, 7. Auflage, 1994, S. 372). Allen Anschwemmsystemen gemeinsam werden die in der zu filtrierenden Flüssigkeit enthaltenen Feststoffe und auch die absichtlich zudosierten Feststoffe (Filterhilfsmittel) durch ein Filtermedium zurückgehalten, wobei sich ein Filterkuchen aufbaut. Dieser ist im Verlauf der Filtration ebenso wie das Filtermittel zu durchströmen. Eine solche Filtration wird auch als Anschwemmfiltration bezeichnet.

Unter den erfindungsgemäß zu filternden und/oder zu stabilisierenden Flüssigkeiten versteht man Fruchtsäfte oder Gärungsgetränke wie Wein oder Bier. Insbesondere wird das erfindungsgemäße Verfahren zur Filtration und/oder Stabilisierung von Bier verwendet.

Die erfindungsgemäß bereitgestellten Filterhilfs- bzw. Stabilisierungsmittel zeichnen sich durch gute Benetzbarkeit mit Wasser und konstanter Durchflussrate bei gleichzeitig guter Filtrierwirkung aus.

Die folgenden Beispiele sollen die Erfindung näher erläutern, ohne sie jedoch darauf zu beschränken.

### Beispiele

### Beispiel 1 (VP:Sty) (50:50)

In einer Rührapparatur wurden 1800 g destilliertes Wasser, 148 g N-Vinylpyrrolidon, 1,8 g N,N'-Divinylethylenharnstoff und 0,125 g Natriumhydroxid unter Einleiten eines schwachen Stickstoffstromes auf 60°C erhitzt. Anschließend wurden 0,272 g Natriumdithionit addiert. Die Mischung wurde auf 75°C erwärmt und auf dieser Temperatur gehalten. Nach 30 Minuten bildeten sich weiße Flocken. Nun wurde innerhalb von 4 Stunden eine Lösung von 2 g Divinylbenzol in 148 g Styrol gleichmäßig zudosiert. Die weißen Flocken gingen in eine Polymerisatsuspension über, die langsam hochviskos wurde. Innerhalb von den 4 Stunden wurde mit einer Lösung von 0,2 g Natriumdithionit in 1250 ml dest. Wasser verdünnt. Anschließend wurde noch 1 Stunde bei 80°C nacherhitzt und dann gekühlt. Der Versuch wurde mit Wasserdampfdestillation gereinigt und die viskose Suspension wurde abfiltriert und mit Wasser gewaschen, um Verunreinigungen wie lösliches Polymer und Monomer zu entfernen. Auswaage 285 g, Ausbeute 95 %.

### Beispiel 2 (VP:Sty) (90:10)

In einer Rührapparatur wurden 1800 g destilliertes Wasser, 267 g N-Vinylpyrrolidon, 3 g N,N'-Divinylethylenharnstoff und 0,125 g Natriumhydroxid unter Einleiten eines schwachen Stickstoffstromes auf 60°C erhitzt. Anschließend wurden 0,272 g Natriumdithionit addiert. Die Mischung wurde auf 75°C erwärmt und auf dieser Temperatur gehalten. Nach 30 Minuten bildeten sich weiße Flocken. Nun wurde innerhalb von 4 Stunden eine Lösung von 0,5 g Divinylbenzol in 29,5 g Styrol gleichmäßig zudosiert. Die weißen Flocken gingen in eine Polymerisatsuspension über, die langsam hochviskos wurde. Innerhalb von den 4 Stunden wurde mit einer Lösung von 0,2 g Natriumdithionit in 1250 ml dest. Wasser verdünnt. Anschließend wurde noch 1 Stunde bei 80°C nacherhitzt und dann gekühlt. Der Versuch wurde mit Wasserdampfdestillation gereinigt und die viskose Suspension wurde abfiltriert und mit Wasser gewaschen, um Verunreinigungen wie lösliches Polymer und Monomer zu entfernen. Auswaage 267 g, Ausbeute 89 %.

### Beispiel 3 (VP:Sty:AS) (5:35:60) (Vergleichsbeispiel)

In einer Rührapparatur wurden 1800 g destilliertes Wasser, 15 g N-Vinylpyrrolidon, 0,3 g N,N'-Divinylethylenharnstoff und 0,125 g Natriumhydroxid unter Einleiten eines schwachen Stickstoffstromes auf 60°C erhitzt. Anschließend wurden 0,272 g Natriumdithionit addiert. Die Mischung wurde auf 75°C erwärmt und auf dieser Temperatur gehalten. Nach 30 Minuten bildeten sich weiße Flocken. Nun wurden innerhalb von 4 Stunden zwei Lösungen gleichmäßig zudosiert: i) 3 g Divinylbenzol in 102 g Styrol; ii) 180 g Acrylsäure. Die weißen Flocken gingen in eine Polymerisatsuspension über, die langsam hochviskos wurde. Innerhalb von den 4 Stunden wurde mit einer Lösung von 0,2 g Natriumdithionit in 1250 ml dest. Wasser verdünnt. Anschließend wurde noch 1 Stunde bei 80°C nacherhitzt und dann gekühlt. Der Versuch wurde mit Wasserdampfdestillation gereinigt und die viskose Suspension wurde abfiltriert und mit Wasser gewaschen, um Verunreinigungen wie lösliches Polymer und Monomer zu entfernen. Auswaage 267 g, Ausbeute 89 %.

### Beispiel 4 (VP:Sty:AS) (5:25:70) (Vergleichsbeispiel)

In einer Rührapparatur wurden 1800 g destilliertes Wasser, 15 g N-Vinylpyrrolidon, 0,3 g N,N'-Divinylethylenharnstoff und 0,125 g Natriumhydroxid unter Einleiten eines schwachen Stickstoffstromes auf 60°C erhitzt. Anschließend wurden 0,272 g Natriumdithionit addiert. Die Mischung wurde auf 75°C erwärmt und auf dieser Temperatur gehalten. Nach 30 Minuten bildeten sich weiße Flocken. Nun wurden innerhalb von 4 Stunden zwei Lösungen gleichmäßig zudosiert: i) 2 g Divinylbenzol in 73 g Styrol; ii) 210 g Acrylsäure. Die weißen Flocken gingen in eine Polymerisatsuspension über, die langsam hochviskos wurde. Innerhalb von den 4 Stunden wurde mit einer Lösung von 0,2 g Natriumdithionit in 1250 ml dest. Wasser verdünnt. Anschließend wurde noch 1 Stunde bei 80°C nacherhitzt und dann gekühlt. Der Versuch wurde mit Wasserdampfdestillation gereinigt und die viskose Suspension wurde abfiltriert und mit Wasser gewaschen, um Verunreinigungen wie lösliches Polymer und Monomer zu entfernen. Auswaage 255 g, Ausbeute 85 %.

Vergleich Beispiel Divergan F (BASF, Deutschland), unlösliche hochvernetzte Polymerisate auf Vinylpyrrolidon Basis.

| Tannoide-Absorption | | |
|---|---|---|
| Probe Stabilisierung Kontaktzeit 5 min. | Menge | Tannoide PVP/mg/l |
| Nullbier | 50 g/hl | 50.87 |
| Beispiel 3 | 50 g/hl | 41.14 |
| Beispiel 5 | 50 g/hl | 34.50 |
| Beispiel 6 | 50 g/hl | 54.50 |
| Divergan F | 50 g/hl | 9.50 |

| Catechinreduktion | | |
|---|---|---|
| Probe Stabilisierung Kontaktzeit 5 min | Menge | Catechinreduktion (%) |
| Beispiel 1 | 50 g/hl | 3.69 |
| Beispiel 2 | 50 g/hl | 6.52 |
| Beispiel 3(Vergleich) | 50 g/hl | 13.60 |
| Beispiel 4 (Vergleich) | 50 g/hl | 20.46 |

Die im folgenden aufgeführten Stabilisierungsversuche wurden an ausgewählten Beispielen durchgeführt. Dazu wurde im einzelnen wie folgt verfahren:
Im Vorfeld der Analysen wird das Bier durch Rühren entgast (Entcarbonisierung des Biers). Die Drehzahl des Magnetrührers ist so zu wählen, dass kein Luftsauerstoff in das Bier eingearbeitet wird.

### Adsorptionskapazität von PVPP

Einwaage von 20 bis 100 mg PVPP (bezogen auf die Trockensubstanz) Zugabe von 200 ml entkarbonisiertem Bier
Kontaktzeit beim Rühren exakt 5 Minuten
Abfiltrieren über Glasfritte
Filtrat der Tannoid- bzw. Anthocyanogenbestimmung zuführen Nullbier (Blindwert) entsprechend ohne Zugabe von PVPP

### Durchführung der Untersuchungen

### Methode zur Bestimmung der Anthocyanogene

G. Harris, R.W. Ricketts: "Studies on non-biological haze...", J. Inst. Brew., Vol. 65, 331-333 (1959), MEBAK, Brautechn. Analysenmethoden, BD II, 3. Aufl., 171-172 (1993), Methodenkorrektur lt. Beschluss der MEBAK vom 22.04.1999.

Die Anthocyanogene werden durch die Überführung in rotgefärbte Anthocyanidine durch heiße Salzsäure photometrisch bestimmt.

### Methode zur Bestimmung der Tannoide

### Tannometer, Fa. Pfeuffer (Trübungstitration)

Der Tannoidgehalt von Bier wird mittels Polyvinylpyrrolidon bestimmt. Über H-Brücken lagern eiweißähnliche Verbindungen Tannoide an. Dadurch entsteht infolge Komplexierung eine Trübung. Im Tannometer wird die Trübung in Abhängigkeit zur zudosierten PVP-Menge gemessen. Das Ergebnis liefert den Tannoidgehalt in mg PVP/l Bier.

Die Berechnung der Adsorptionskapazität von PVPP [%] erfolgt aus den Tannoidwerten.

### Filtration einer Standard-Trübungslösung

Die Filtrationswirkung wird anhand der Klärung einer Standard-Trübungslösung, d.h. einer Formazinsuspension mit definierter Trübung, bestimmt. Diese Lösungen sind dem Fachmann zur Charakterisierung von Filterhilfsmitteln für die Getränkeindustrie bekannt. Die Untersuchung wird als Anschwemmfiltration durchgeführt. Hierzu wurde die Formazin-Suspension mit dem erfindungsgemäßen Filterhilfssmittel gemäß EBC-Test bei einem Anschwemmdruck von 4,4 bar filtriert. Nach jeweils 5 1 Durchfluss wurde die Trübung nach EBC bestimmt. Das Filtrat gilt als klar, wenn der EBC-Wert weniger als 1 beträgt. Außerdem wurde die Durchflussrate und der Druckabfall am Filterkörper (Druckdifferenz von/nach Filterkörper) gemessen. Die erfindungsgemäßen Polymerisate zeichnen sich durch einen geringen Druckabfall und hohe Filtrationsraten aus. Während der gesamten Untersuchung blieben sowohl Anschwemmdruck als auch Filtrationsrate konstant, was die vorteilhaften Eigenschaften der erfindungsgemäßen Filterhilfsmittel belegt (hohe Standzeit).

| Filtrationsversuche | | | | | | |
|---|---|---|---|---|---|---|
| Polymerisat | Durchflussrate (l/h) | Druckabfall Δp(bar) nach 15 l | EBC-Trübung (Ausgang) | EBC-Trübung (nach 5 l) | EBC-Trübung (nach 10 l) | EBC-Trübung (nach 15 l) |
| Beispiel 1 | 30 | 0,2 | 15,3 | 0,2 | 0,2 | 0,1 |
| Beispiel 2 | 30 | 0,2 | 20 | 0,8 | 0,4 | 0,2 |

## Patentansprüche

1. Unlösliche, nur wenig quellbare Popcorn-Polymerisate, enthaltend
a) 0,1 bis 99 Gew.-% eines N-Vinyllactams oder N-Vinylamins
b) 0 bis 10 Gew.-% einer difunktionellen Vernetzerkomponente
c) 0,1 bis 50 Gew.-% mindestens eines weiteren radikalisch polymerisierbaren Monomers
wobei sich die Gew.-%-Angaben der Einzelkomponenten auf die Gesamtmenge des Popcorn-Polymerisats beziehen und sich zu 100 % addieren.

2. Popcorn-Polymerisat gemäß Anspruch 1, **dadurch gekennzeichnet, dass** die unter (c) aufgeführten Polymere ausgewählt sind aus der Gruppe der Styrole und/oder mindestens eines einfach ungesättigten Styrolderivates und/oder Acrylsäure sowie deren Ester und Amide.

3. Popcorn-Polymerisate gemäß einem der Ansprüche 1 oder 2, **dadurch gekennzeichnet, dass** die unter (a) aufgeführten N-Vinyllactame bzw. N-Vinylamine ausgewählt sind aus der Gruppe N-Vinylpyrrolidon, N-Vinylperidon, N-Vinylcaprolactam, N-Vinylimidazol, N-Vinyl-2-Methylimidazol, Ni-Vinyl-4-Methylimidazol oder N-Vinylformamid.

4. Verwendung von Popcorn-Polymerisaten gemäß einem der Ansprüche 1 bis 3 als Filterhilfs- und/oder Stabilisierungsmittel zur Filtration bzw. Stabilisierung von wässrigen Flüssigkeiten.

5. Verwendung von Popcorn-Polymerisaten gemäß Anspruch 4, **dadurch gekennzeichnet, dass** neben der Filtration gleichzeitig eine Stabilisierung der wässrigen Flüssigkeit stattfindet.

6. Verfahren zur Filtration und/oder Stabilisierung einer wässrigen Flüssigkeit, **dadurch gekennzeichnet, dass** man ein Polymerisat gemäß einem der Ansprüche 1 bis 3 einsetzt.

7. Verfahren gemäß Anspruch 6, **dadurch gekennzeichnet, dass** bei der Filtration die Technik der Anschwemmfiltration verwendet wird.

8. Verfahren gemäß einem der Ansprüche 6 oder 7, **dadurch gekennzeichnet, dass** es sich bei der wässrigen Flüssigkeit um eine Flüssigkeit ausgewählt aus der Gruppe der Fruchtsaft- oder Gärungsgetränke handelt.

9. Verfahren gemäß einem der Ansprüche 6 bis 8, **dadurch gekennzeichnet, dass** es sich bei der wässrigen Flüssigkeit um Bier handelt.

10. Filterhilfsmittel enthaltend Polymerisate gemäß einem der Ansprüche 1 bis 3.

11. Stabilisierungsmittel enthaltend Polymerisate gemäß einem der Ansprüche 1 bis 3.
